# EUROPEAN PATENT APPLICATION

(11) **EP 2 546 797 A1**
(43) Date of publication of application: **16.01.2013**
(21) Application number: 10847531.0
(22) Date of filing: 22.04.2010
(51) Int. Cl.: G06Q 50/00

(54) **SYSTEM FOR MANAGING USED RESOURCES IN GUEST ROOM**

(30) Priority: 11.03.2010 KR 20100021717
(71) Applicant: Claire Corporation, Seoul 135-952 (KR)
(72) Inventor: HWANG, Jun Seong, Seoul 135-090 (KR)
(74) Representative: Van Malderen, Joëlle
(86) International application number: PCT/KR2010/002530
(87) International publication number: WO 2011/111897

(57) **Abstract**

Disclosed is a system for managing a guest room. The system for managing a guest room includes a guest room management server and a terminal. The guest room management server, which is connected to the terminal, controls the resource control device in order to provide resources such as electricity, water, gas, and wireless/wired network to the guest room associated with the terminal. The guest room management server checks the connectivity of the terminal, and stops the supply of resources to the guest room when the terminal is disconnected. The terminal receives information on the cost or the volume of the resources used during the period that the terminal was connected. The user can easily see the information on the resources that have been used while using the guest room, which reduces the chance of disputes related to the cost of the resources used.

## Description

### Technical Field

The present invention relates to a system for managing a guest room, more particularly, to a system for managing a guest room that is able to conveniently manage a quantity of power usage, a quantity of gas usage, and a quantity of water usage provided to the guest room.

### Background Art

In accommodations such as a hotel, a condominium, and the like in which a plurality of guest rooms needs to be managed, accurate calculation of a quantity of power usage, a quantity of gas usage, and a quantity of water usage provided to the plurality of guest rooms is of paramount significance. Conventionally, measuring equipment used to measure such usage is installed in the plurality of guest rooms respectively, and each of the plurality of guest rooms is visited so that the measuring equipment can be read. Accordingly, such a practice proves to be not only time consuming but also inconvenient for measuring resources, for example, power usage, and the like.

A method of installing the measuring equipment in each of the plurality of guest rooms, and checking usage of the plurality of guest rooms, in a server by connecting the measuring equipment with the server through a communication network is suggested. Nevertheless, users of hotels and condominiums have grown hostile towards the method due to a likelihood of the measuring equipment being tampered with by a manager of the hotels and the condominiums.

### Disclosure of Invention

### Technical Goals

An aspect of the present invention provides a system for managing a guest room that conveniently manages resource usage such as power, gas, a wired and wireless network connection, water, and the like provided to the guest room.

Another aspect of the present invention provides a system for managing a guest room that accurately provides in real time information on resource usage such as power, gas, a wired and wireless network connection, water, and the like, and calculates a user fee based on the information on the resource usage.

### Technical solutions

According to an aspect of the present invention, there is provided an apparatus for managing a terminal, the apparatus including: a setting unit to set a password for a terminal associated with a guest room, and a transmitting unit to transmit information associated with the password and the guest room to the terminal, wherein the password is used to authenticate the terminal, and when the terminal is authenticated, a resource is provided to the guest room.

According to another aspect of the present invention, there is provided an apparatus for managing a guest room, the apparatus including: a receiving unit to receive an authentication request message with respect to a terminal from a terminal associated with the guest room, an authenticating unit to authenticate the terminal based on the authentication request message received, a resource controlling unit to control a resource provided to the guest room based on a result of the authentication with respect to the terminal, and a transmitting unit to transmit resource usage information corresponding to the guest room, wherein the resource usage information is displayed in the terminal.

According to still another aspect of the present invention, there is provided a terminal, including: a transmitting unit to transmit an authentication request message to an apparatus for managing a resource in a guest room, a receiving unit to receive an authentication message from the apparatus for managing the resource in the guest room in response to the authentication request message, and receive resource usage information related to the resource provided in the guest room associated with the terminal or fee information corresponding to the resource usage information from the apparatus for managing the resource in the guest room, and a displaying unit to display the resource usage information or the fee information, wherein the apparatus for managing the resource in the guest room controls the resource to be provided to the guest room when the authentication message is transmitted.

### Effects of Invention

According to embodiments of the present invention, it is possible to conveniently manage resource usage such as power, gas, a wired and wireless network connection, water, and the like.

According to embodiments of the present invention, it is possible to provide accurate information in real time on resource usage such as power, gas, a wired and wireless network connection, water, and the like to a guest room user.

### Brief Description of Drawings

FIG. 1 is a diagram illustrating an apparatus for managing a terminal that sets the terminal to be associated with a guest room according to an embodiment of the present invention.
FIG. 2 is a diagram illustrating an apparatus for managing a resource in a guest room that controls a resource to be provided to the guest room using a terminal according to an embodiment of the present invention.
FIG. 3 is a block diagram illustrating a structure of an apparatus for managing a terminal according to an embodiment of the present invention.
FIG. 4 is a block diagram illustrating a structure of an apparatus for managing a resource in a guest room according to an embodiment of the present invention.
FIG. 5 is a block diagram illustrating a structure of a terminal according to an embodiment of the present invention.

### Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

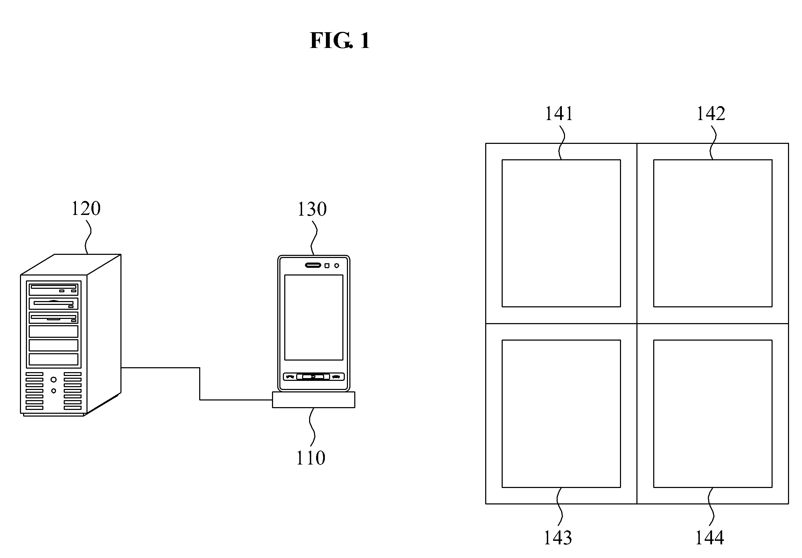

FIG. 1 is a diagram illustrating an apparatus for managing a terminal that sets the terminal to be associated with a guest room according to an embodiment of the present invention.

A manager of a hotel, a condominium, and the like allows a user to use a plurality of guest rooms 141 to 144, and collects a usage fee. The manager may collect the usage fee with respect to the plurality of guest rooms 141 to 144, and also collect a fee with respect to resource usage such as power, gas, a wired and wireless network connection, water, and the like from the user.

Here, the manager may need to measure the resource usage with respect to the plurality of guest rooms 141 to 144 individually, and provide the usage fee to the user by accurately calculating the usage fee with respect to the resource usage.

The manager may use a terminal 130 associated with the plurality of guest rooms 141 to 144 in order to efficiently perform managing of the plurality of guest rooms 120 and 130.

An apparatus for managing a terminal 110 may be in a form of a cradle that can be connected to the terminal 130. The apparatus for managing the terminal 110 may be connected to a guest room information server 120 and a universal serial bus (USB), such that information associated with the guest room stored in the guest room information server 120 may be stored in the terminal 130.

When a guest room user decides to use a specific guest room, the manager connects the terminal 130 to the apparatus for managing the terminal 110.

The apparatus for managing the terminal 110 may initialize the terminal 130 by resetting the terminal 130.

According to an embodiment of the present invention, the apparatus for managing the terminal 110 may connect the plurality of guest rooms 141 to 144 to the terminal 130, and set a password for the terminal 130 associated with the plurality of guest rooms 141 to 144.

The apparatus for managing the terminal 110 may transmit the set password to the terminal 130.

According to an embodiment of the present invention, the apparatus for managing the terminal 110 may transmit information associated with the plurality of guest rooms 141 to 144 to the terminal 130.

The information associated with the plurality of guest rooms 141 to 144 may include a telephone number associated with the plurality of guest rooms 141 to 144 and a list of menu items available on order to the plurality of guest rooms 141 to 144. The terminal 130 may display the information associated with the plurality of guest rooms 141 to 144 to the user using a displaying unit equipped in the terminal. The information associated with the plurality of guest rooms 141 to 144 may be stored in the guest room information server 120, and the apparatus for managing the terminal 110 may select the information associated with the plurality of guest rooms 141 to 144 among pieces of information stored in the guest room server 120 and transmit the selected information associated with the plurality of guest rooms 141 to 144 to the terminal 130.

The information associated with the plurality of guest rooms 141 to 144 may include a unit price of a resource provided to the plurality of guest room 141 to 144. The guest room user may verify calculated fee information based on the unit price of the resource using the terminal 130.

Also, the information associated with the plurality of guest rooms 141 to 144 may be information associated with a quantity of resources anticipated to be used based on a predetermined period during which the guest room user utilizes a guest room.

When the guest room user checks in, the guest room user receives the terminal 130 associated with the designated guest room 141.

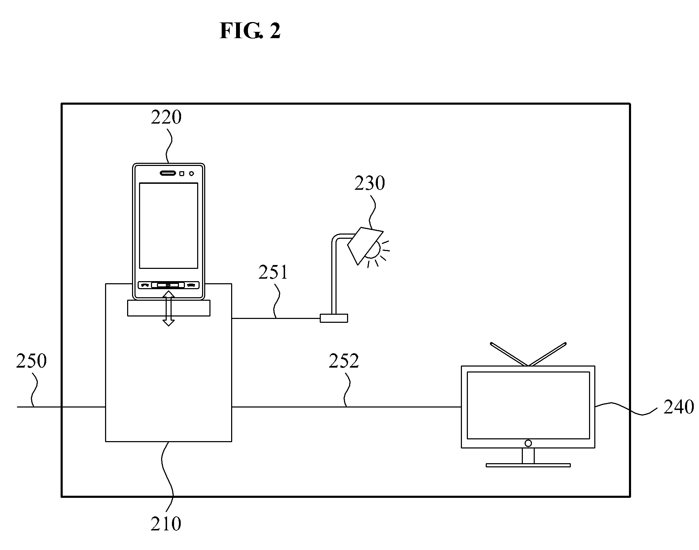

FIG. 2 is a diagram illustrating an apparatus for managing a resource in a guest room that controls a resource to be provided to the guest room using a terminal according to an embodiment of the present invention.

A guest room user may connect a received terminal 220 to an apparatus for managing a resource in a guest room 210. The apparatus for managing the resource in the guest room 210 may be installed in each guest room and control a resource provided to the each guest room. In the each guest room, resources such as power, water, gas, a wired and wireless network connection, and the like may be provided.

The apparatus for managing the resource in the guest room 210 may create resource usage information by measuring the resource used by the guest room user in the each guest room. The apparatus for managing the resource in the guest room 210 may transmit the resource usage information to the terminal 220, and check the resource usage information using the terminal 220.

According to another embodiment of the present invention, the apparatus for managing the resource in the guest room 210 may receive a unit price of a resource from the terminal 220, and create fee information associated with the resource provided to the each guest room. The apparatus for managing the resource in the guest room 210 may transmit the fee information to the terminal 220, and check the fee information using the terminal 220.

The apparatus for managing the resource in the guest room 210 may authenticate the terminal 220. When the guest room user enters a guest room associated with the terminal 220 and connects the terminal 220 to the apparatus for managing the resource in the guest room 210, the apparatus for managing the resource in the guest room 210 may succeed in authenticating the terminal 220.

However, when the guest room user enters another guest room unassociated with the terminal 220, the apparatus for managing the resource in the guest room may not authenticate the terminal 220.

According to an embodiment of the present invention, the apparatus for managing the resource in the guest room 210 may authenticate the terminal 220 using a password. The terminal 220 may receive the password determined according to a guest room from an apparatus for managing a terminal. The terminal 220 may transmit the received password to the apparatus for managing the resource in the guest room 210. The apparatus for managing the resource in the guest room 210 may compare the received password with a password for the guest room. When the terminal 220 and the guest room are associated, the received password from the terminal 220 and the password for the guest room may match, and the apparatus for managing the resource in the guest room 210 may authenticate the terminal 220.

When the terminal 220 and the guest room are unassociated, the received password from the terminal 220 and the password for the guest room may be different, and the apparatus for managing the resource in the guest room 210 may not authenticate the terminal 220.

When the apparatus for managing the resource in the guest room 210 is authenticated, the apparatus for managing the resource in the guest room 210 may provide a resource to a guest room. According to an embodiment of the present invention, the apparatus for managing the resource in the guest room 210 may provide the resource to the guest room only in an instance in which the terminal 220 is physically connected to the apparatus for managing the resource in the guest room 210.

When the resource is provided to the guest room, the guest room user may be able to use guest room amenities, for example, a lamp 230, a television (TV) 240, and the like.

According to an embodiment of the present invention, information associated with a guest room may be information associated with a quantity of resources anticipated to be used based on a predetermined period during which a guest room user utilizes the guest room. The terminal 220 may compare the quantity of resources anticipated to be used with a quantity of resources actually used by the guest room user, and display the comparison result to the guest room user. For example, when the quantity of resources actually used exceeds 60% of the quantity of resources anticipated to be used, the terminal 220 may display the fact that the quantity of resources actually used exceeds 60% of the quantity of resources anticipated to be used, to the guest room user using a yellow light-emitting diode (LED). Further, when the quantity of resources actually used exceeds 80% of the quantity of resources anticipated to be used, the terminal 220 may display the fact that the quantity of resource actually used exceeds 80% of the quantity of resources anticipated to be used, to the guest room user using a red LED.

According to an embodiment of the present invention, in a case of cleaning the guest room or making repairs to the guest room, resources in the guest room may be used. That is, when a vacuum cleaner is used to clean the guest room, the resource in the guest room may be additionally used. A fee of using the resource may not be charged to the guest room user. Accordingly, a manager cleaning the guest room, or repairing the guest room may use a terminal different from the terminal of the guest room user.

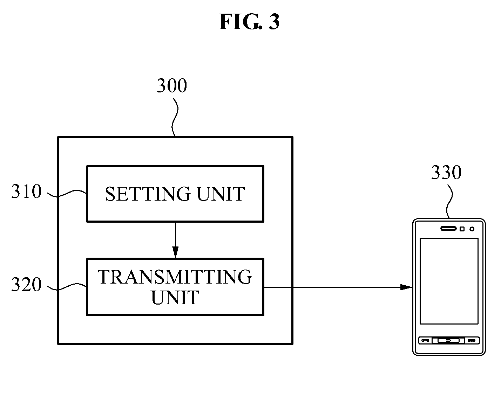

FIG. 3 is a block diagram illustrating a structure of an apparatus for managing a terminal according to an embodiment of the present invention. The apparatus for managing the terminal 300 may include a setting unit 310 and a transmitting unit 320.

The setting unit 310 may set a password for a terminal 330 associated with each guest room. According to an embodiment of the present invention, the password may be determined according to the each guest room. That is, the setting unit 310 may determine the password according to the each guest room, and set the determined password for the terminal 330 associated with the guest room.

The transmitting unit 320 may transmit information associated with the password set for the terminal 330 and information associated with the guest room, to the terminal 330. According to an embodiment of the present invention, the information associated with the guest room may include a telephone number associated with the guest room. That is, a telephone number of a reception desk managing the guest room, a telephone number of a restaurant associated with the guest room, and the like. According to another embodiment of the present invention, the information associated with the guest room may include a list of menu items available on order to the guest room. The guest room user may verify the information associated with the guest room using the terminal 330, and use the guest room more conveniently.

According to an embodiment of the present invention, a password may be used to authenticate the terminal 330. For example, the guest room user may input the password by operating the terminal 330. When the password input by the guest room user and a password set for the terminal 330 match, the terminal 330 may be authenticated.

Once the terminal 330 is authenticated, a resource may be able to be provided to a guest room associated with the terminal 330. According to an embodiment of the present invention, the resource may be at least one of power, gas, water, and a wired and wireless network connection.

According to an embodiment of the present invention, the information associated with the guest room may be information associated with a unit price of a resource to be provided to the guest room. The terminal 330 may calculate fee information associated with a quantity of resources provided to the guest room, based on the information associated with the unit price of the resource, and display the calculated fee information to the guest room user.

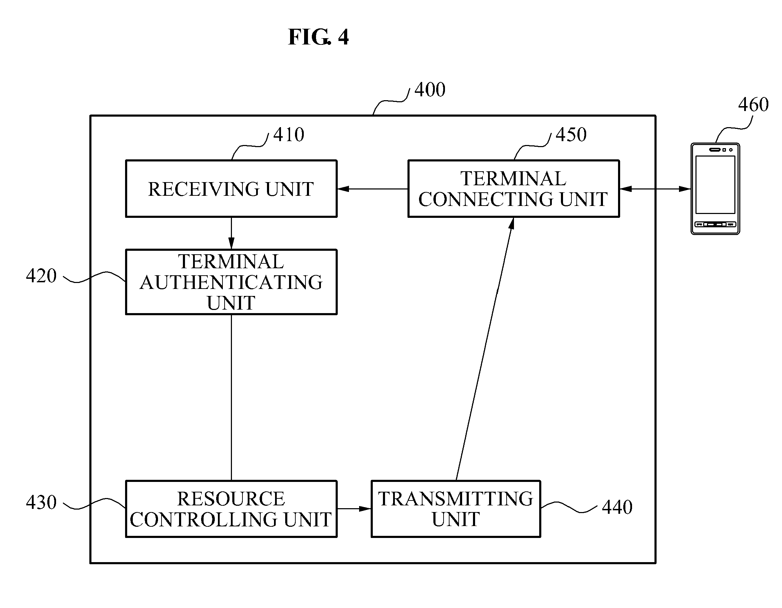

FIG. 4 is a block diagram illustrating a structure of an apparatus for managing a resource in a guest room according to an embodiment of the present invention. The apparatus for managing the resource in the guest room 400 may include a receiving unit 410, a terminal authenticating unit 420, a resource controlling unit 430, a transmitting unit 440, and a terminal connecting unit 450.

The receiving unit 410 may receive an authentication request message with respect to a terminal 460. According to an embodiment of the present invention, the terminal 460 and the apparatus for managing the resource in the guest room 400 may be connected using the terminal connecting unit 450. The terminal connecting unit 450 may transmit data to the terminal 460 or receive the data from the terminal 460 by physically connecting to the terminal 460.

The terminal authenticating unit 420 may authenticate the terminal 460 based on the authentication request message. According to an embodiment of the present invention, the terminal 460 may be assigned a password from an apparatus for managing a terminal. The password assigned from the apparatus for managing the terminal may be determined according to a guest room associated with the terminal 460. Since the apparatus for managing the resource in the guest room 400 is installed in each guest room respectively, the password determined according to the guest room may be made available to the apparatus for managing the resource in the guest room 400?.

According to an embodiment of the present invention, the authentication request message may include the password received from the terminal 460. By way of example, when the password that the apparatus for managing the resource in the guest room receives from the terminal 460 is a first password, and a password that the apparatus for managing the terminal assigns to the terminal 460 is a second password, the terminal authenticating unit 420 may authenticate the terminal 460 when the first password and the second password match.

The resource controlling unit 430 may control a resource provided to a guest room associated with the terminal 460 based on the authentication result with respect to the terminal 460. According to an embodiment of the present invention, the resource controlling unit 430 may provide the resource to the guest room when the terminal 460 is authenticated. Resources may be at least one of power, gas, water, a wired and wireless network connection, and the like.

According to an embodiment of the present invention, the terminal connecting unit 450 may transmit information as to whether the terminal 460 is physically connected to the terminal connecting unit 450. The resource controlling unit 430 may provide the resource to the guest room only in an instance in which the terminal 460 is physically connected to the terminal connecting unit 450.

The resource controlling unit 430 may create resource usage information by measuring the resource provided to the guest room. The transmitting unit 440 may transmit the resource usage information to the terminal 460. The terminal 460 may display the resource usage information to the guest room user. Since the guest room user is able to check the resource usage information of the guest room user via the terminal 460, a possibility of disputes arising in relation to the resource provided to the guest room is reduced.

According to another embodiment of the present invention, the receiving unit 410 may receive a unit price of the resource, from the terminal 460, provided to the guest room. The resource controlling unit 430 may create fee information corresponding to the resource usage information based on the unit price received from the terminal 460. The transmitting unit 440 may transmit the fee information to the terminal 460, and the terminal 460 may display the fee information to the guest room user. Since the guest room user is able to check the fee information associated with the resource used by the guest room user, a possibility of disputes arising in relation to the resource provided to the guest room is reduced.

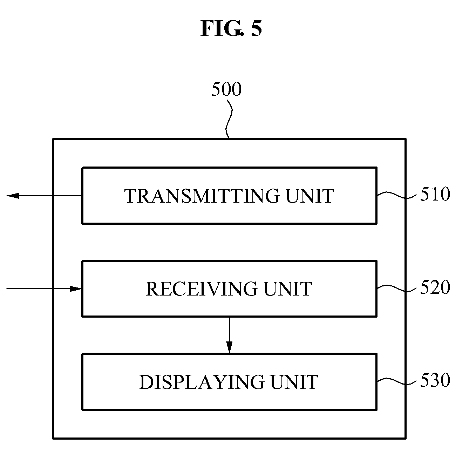

FIG. 5 is a block diagram illustrating a structure of a terminal according to an embodiment of the present invention. The terminal 500 may include a transmitting unit 510, a receiving unit 520, and a displaying unit 530.

The transmitting unit 510 may transmit an authentication request message via an apparatus for managing a resource in a guest room. According to an embodiment of the present invention, the transmitting unit 510 may transmit a first password by including the first password in the authentication request message. The first password may be a password that the terminal 500 receives from an apparatus for managing a terminal. The apparatus for managing the resource in the guest room may compare the first password with a second password. The second password may be determined according to a guest room associated with the terminal 500.

When a guest room user enters the guest room associated with the terminal 500 and connects the terminal 500 to the apparatus for managing the resource in the guest room, the first password and the second password may match. In this instance, the apparatus for managing the resource in the guest room may succeed in authenticating the terminal 500.

However, when the guest room user enters another guest room unassociated with the terminal 500, the first password and the second password may be different. In this instance, the apparatus for managing the resource in the guest room may not authenticate the terminal 500.

When the terminal 500 is authenticated, the receiving unit 520 may receive an authentication message from the apparatus for managing the resource in the guest room. Also, when the terminal 500 is authenticated, the apparatus for managing the resource in the guest room may control a resource to be provided to the guest room associated with the terminal 500.

According to an embodiment of the present invention, the apparatus for managing the resource in the guest room may provide the resource to the guest room only in an instance in which the terminal 500 is physically connected to the apparatus for managing the resource in the guest room.

According to an embodiment of the present invention, the receiving unit 520 may receive information associated with the guest room from the apparatus for managing the terminal, and the displaying unit 530 may display the information associated with the guest room.

In this instance, the information associated with the guest room may include a telephone number associated with the guest room, a list of menu items available on order to the guest room, a price, and the like. Even in an instance in which the information associated with the guest room changes, the terminal 500 may display information most up-to-date to the guest user.

According to another embodiment of the present invention, the information associated with the guest room may be resource usage information provided to the guest room. The displaying unit 530 may display the resource usage information to the guest room user.

According to still another embodiment of the present invention, the transmitting unit 510 may transmit a unit price of the resources provided to the guest room to the apparatus for managing the resource in the guest room. The apparatus for managing the resource in the guest room may calculate fee information associated with the resource provided to the guest room, and transmit the fee information to the terminal 500. The receiving unit 520 may receive the fee information, and the displaying unit 530 may display the fee information to the guest room user.

According to yet another embodiment of the present invention, the receiving unit 520 may receive the resource usage information provided to the guest room, and calculate the fee information based on the unit price of the resources provided to the guest room. The displaying unit 530 may display the fee information to the guest room user.

According to an embodiment of the present invention, the receiving unit 520 may receive information associated with the unit price of the resources provided to the guest room.

The guest room user may check the fee information associated with the resource used by the guest room user, using the terminal 500. Accordingly, a possibility of disputes arising in relation to the resources provided to the guest room is reduced.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

The exemplary embodiments according to the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media such as hard disks, floppy disks, and magnetic tape; optical media such as CD ROM discs and DVD; magneto-optical media such as floptical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. An apparatus for managing a terminal, the apparatus comprising:
a setting unit to set a password for a terminal associated with a guest room; and
a transmitting unit to transmit information associated with the password and the guest room to the terminal,
wherein the password is used to authenticate the terminal, and
when the terminal is authenticated, a resource is provided to the guest room.

2. The apparatus of claim 1, wherein the information associated with the guest room comprises a telephone number associated with the guest room, and a list of menu items available on order to the guest room.

3. The apparatus of claim 1, wherein the information associated with the guest room comprises information associated with a unit fee of the resource provided to the guest room.

4. The apparatus of claim 1, wherein the password is determined based on the guest room.

5. The apparatus of claim 1, wherein the resource is at least one of power, gas, water, and a wired and wireless network connection.

6. An apparatus for managing a guest room, the apparatus comprising:
a receiving unit to receive an authentication request message with respect to a terminal from a terminal associated with the guest room;
an authenticating unit to authenticate the terminal based on the authentication request message received;
a resource controlling unit to control a resource provided to the guest room based on a result of the authentication with respect to the terminal; and
a transmitting unit to transmit resource usage information corresponding to the guest room,
wherein the resource usage information is displayed in the terminal.

7. The apparatus of claim 6, further comprising:
a terminal connecting unit to be physically connected with the terminal,
wherein the resource controlling unit provides the resource to the guest room only in an instance in which the terminal connecting unit is physically connected with the terminal.

8. The apparatus of claim 6, wherein:
the receiving unit receives a unit fee for the resource from the terminal, the resource controlling unit estimates a quantity of the resource provided to the guest room, creates the resource usage information, and creates fee information corresponding to the resource usage information based on the unit fee and the resource usage information, and
the transmitting unit transmits the fee information to the terminal.

9. The apparatus of claim 6, wherein the resource is at least one of power, gas, water, and a wired and wireless network connection.

10. The apparatus of claim 6, wherein:
the receiving unit receives a first password from the terminal, and
the terminal authenticating unit authenticates the terminal when the received first password matches a second password set with respect to the terminal.

11. The apparatus of claim 10, wherein the second password is determined based on the guest room.

12. A terminal, comprising:
a transmitting unit to transmit an authentication request message to an apparatus for managing a resource in a guest room;
a receiving unit to receive an authentication message from the apparatus for managing the resource in the guest room in response to the authentication request message, and receive resource usage information related to the resource provided in the guest room associated with the terminal or fee information corresponding to the resource usage information from the apparatus for managing the resource in the guest room; and
a displaying unit to display the resource usage information or the fee information,
wherein the apparatus for managing the resource in the guest room controls the resource to be provided to the guest room when the authentication message is transmitted.

13. The terminal of claim 12, wherein:
the transmitting unit transmits a first password to the apparatus for managing the resource in the guest room, and
the receiving unit receives the authentication message when the first password and a second password determined based on the guest room match.

14. The terminal of claim 12, wherein:
the receiving unit receives information associated with the guest room from the apparatus for managing the resource in the guest room, and
the displaying unit displays the information associated with the guest room.

15. The terminal of claim 14, wherein the information associated with the guest room comprises a telephone number associated with the guest room, and a list of menu items available on order to the guest room.

16. The terminal of claim 12, wherein:
the receiving unit receives information associated with a unit fee of the resource from an apparatus for managing a terminal, and
the displaying unit displays fee information with respect to the resource provided to the guest room, calculated based on the information associated with the unit fee of the resource.

17. The terminal of claim 18, wherein:
the transmitting unit transmits the information associated with the unit fee of the resource to the apparatus for managing the resource in the guest room, and
the receiving unit receives the fee information from the apparatus for managing the resource in the guest room.

18. The terminal of claim 12, wherein the resource is at least one of power, gas, water, and a wire and wireless network connection.

19. The terminal of claim 12, wherein the resource is provided to the guest room only in an instance in which the terminal and the apparatus for managing the resource in the guest room are physically connected.
